# EUROPEAN PATENT SPECIFICATION

(11) **EP 1 630 652 B1**
(45) Date of publication and mention of the grant of the patent: **28.07.2010**
(21) Application number: 04006834.8
(22) Date of filing: 22.03.2004
(51) Int. Cl.: G06F 3/041

(54) **Coordinate positioning device with anti-noise method**
Koordinateneingabegerät mit Verfahren zur Unterdrückung von Rauschen
Dispositif d'entrée de coordonnées et procédé pour réduire le bruit de fond

(43) Date of publication of application: 01.03.2006
(73) Proprietor: HTC Corporation, Taoyuan County 330 (TW)
(72) Inventor: Chang, Wei-Chih, Taipei County 231 (TW); Wang, Wei-Chian, Taipei County 231 (TW); Chen, Chia-Wei, Taipei County 231 (TW)
(74) Representative: Verscht, Thomas Kurt Albert

(56) References cited:
- US-A- 5 831 599
- US-B1- 6 366 866
- PATENT ABSTRACTS OF JAPAN vol. 1996, no. 05, 31 May 1996 (1996-05-31) -& JP 08 016304 A (NEC HOME ELECTRON LTD), 19 January 1996 (1996-01-19)
- PATENT ABSTRACTS OF JAPAN vol. 1997, no. 06, 30 June 1997 (1997-06-30) -& JP 09 044308 A (ZANAVY INFORMATICS:KK), 14 February 1997 (1997-02-14)
- PATENT ABSTRACTS OF JAPAN vol. 2002, no. 03, 3 April 2002 (2002-04-03) -& JP 2001 306259 A (NEC INFRONTIA CORP), 2 November 2001 (2001-11-02)
- PATENT ABSTRACTS OF JAPAN vol. 015, no. 255 (P-1221), 27 June 1991 (1991-06-27) -& JP 03 083113 A (SHARP CORP), 9 April 1991 (1991-04-09)
- PATENT ABSTRACTS OF JAPAN vol. 2003, no. 07, 3 July 2003 (2003-07-03) -& JP 2003 091365 A (SHARP CORP), 28 March 2003 (2003-03-28)

## Description

### BACKGROUND OF THE INVENTION

### Field of the Invention

The invention relates in general relates to a coordinate positioning device and the method thereof, and more particularly, to an anti-noise coordinate positioning device and the method thereof.

### Description of the Related Art

Coordinate positioning devices are widely applied in man-machine interface to facilitate the communication between the user and the electronic product. The coordinate positioning device, such as a mouse or a film positioning device for instance, detects the position and further has the position indicated on the screen by means of a cursor. The film positioning device, which includes two pieces of resistance-type films or capacitance-type films, detects the coordinates of the contact point touched by the user.

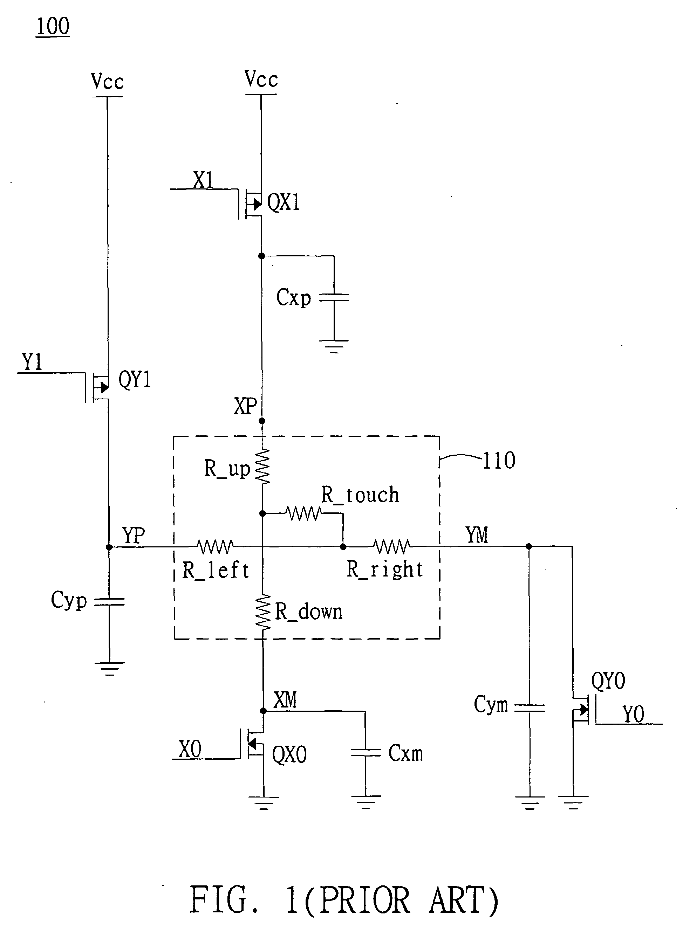

Referring to FIG. 1, a circuit diagram of a resistance-type film positioning device. Resistance-type film positioning device 100 includes a thin film 110. The thin film 110 further includes a thin film X and a thin film Y, wherein the thin film X and the thin film Y are plane resistances and have not any mutual contact in natural status. The resistance value on the thin film X changes along with the change of X-coordinate, not with the change of Y-coordinate, while the resistance value on the thin film Y changes along with the change of Y-coordinate, not with the change of X-coordinate. The thin film positioning device further includes transistors QX0, QX1, QY0, and QY1 as well as capacitances Cxp, Cxm, Cyp, and Cym for detecting the contact points and isolating the noises thereof. Of which, transistors QX0, QX1, QY0, and QY1 are controlled by signals X0, X1, Y0, and Y1.

When the user touches the film positioning device 100, the thin film X and the thin film Y will be connected at a contact point whose resistance is R_touch. On the thin film X, the resistance at points above the contact point is R_up, while the resistance at points below the contact point is R_down. On the thin film Y, the resistance at points to the left of the contact point is R_left, while the resistance at points to the right of the contact point is R_right. The thin film positioning device 100 will obtain the Y-coordinate of the contact point according to the ratio between R_up and R_down, and will obtain the X-coordinate of the contact point according to the ratio between R_right and R_left.

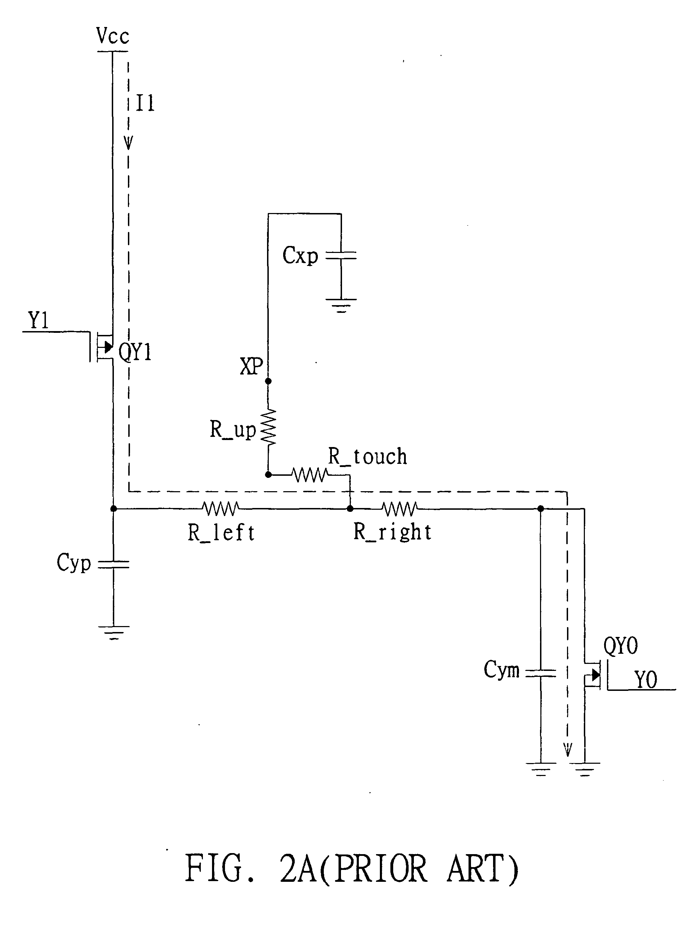

FIG. 2A is an equivalent circuit diagram for a thin film positioning device when detecting the X-coordinate of the contact point. When detecting the X-coordinate of the contact point, transistors QY0 and QY1 are switched on, allowing an electric current I1 to reach the ground via QY1, R_left, R_right, and QY0 in succession. After measuring the voltage at point XP, the ration between R_left and R_right will be obtained whereby the X-coordinate of the contact point can be obtained accordingly. Besides, the X-coordinate of the contact point can also be obtained after measuring the voltage at point XM.

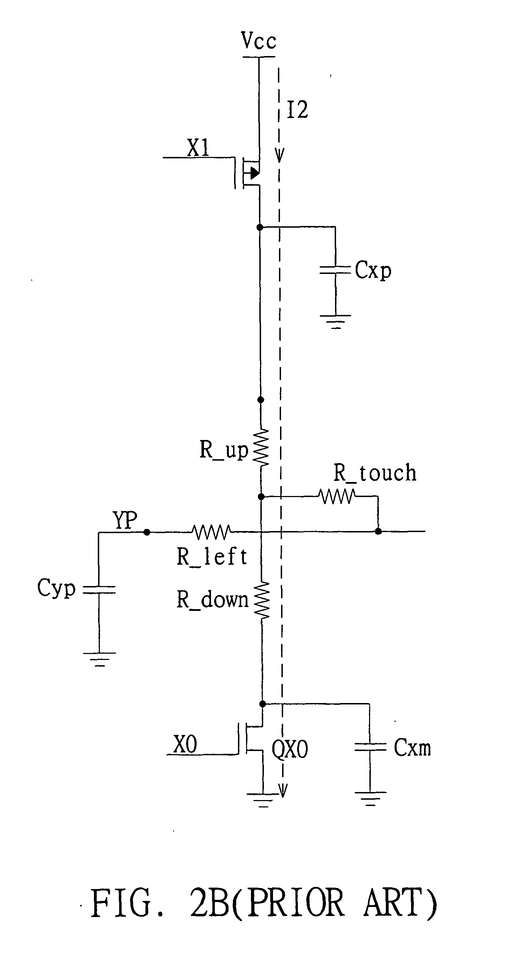

FIG. 2B is an equivalent circuit diagram for a thin film positioning device when detecting the Y-coordinate of the contact point. When detecting the Y-coordinate of the contact point, transistors QX0 and QX1 are switched on, allowing an electric current I2 to reach the ground via QX1, R_up, R_down, and QX0 in succession. After measuring the voltage at point YP, the ration between R_up and R_down will be obtained whereby the Y-coordinate of the contact point can be obtained accordingly. Besides, the Y-coordinate at the contact point can also be obtained after measuring the voltage at point YM.

When applied in an electronic device, a thin film positioning device is likely to be coupled to plenty of noises which will cause errors to the coordinates obtained. For example, despite the user presses at the same contact point, however, due to the interference of the noise, the obtained coordinates of the contact point may be changeable. The general practice is to have multiple samplings of the contact point, say, 8 samplings, within a specific period of time, then use the average values of the 8 samplings as the coordinates of the contact point. However, using multiple sampling to determine the coordinates of the contact point is both time-consuming and energy consuming.

With respect to the prior art attention is drawn to JP8016304 which is concerned with providing tablet equipment for processing image data while removing noise generated by the influence of liquid crystal. To this end, a character or a graphic is plotted on a tablet, writing pressure is converted to image data V1, and X coordinate data and Y coordinate data are outputted from the tablet to a low-pass filter and converted to digital data by an A/D converter after high frequency noise is removed. Then, the converted digital data are stored in a storage part in every half cycle T/2 of a cycle detected by a detecting means, an arithmetic part calculates plural average values from the digital data stored in this storage part and operates the digital data of an intermediate value from the plural average values, and a control means performs control to display those data on a liquid crystal display part.

From U.S. patent 5,831,599 a coordinate input apparatus is known which is capable of preventing inaccurate detection of a position caused by chattering or a disturbed timing, thereby ensuring accurate detection of a position. Open check for determining whether the resistance of contact between a first resistive film and a second resistive film exceeds a preset value for a predetermined time is carried out before and after obtaining a signal of an X-coordinate position and also before and after obtaining a signal of a Y-coordinate position. In addition, there is provided a processing circuit, which detects the signals from tablet electrodes for multiple times within a predetermined time to obtain the position signals, converts them into digital values, calculates the difference between the values, and performs arithmetic processing and output only if the difference is a reference value or less.

With respect to the prior art further attention is drawn to JP9044308 which is concerned with easily and precisely detecting touch at a prescribed part of a touch panel by an operator without providing a dedicated touch panel detection circuit. To this end, in this touch panel controller without providing a touch detection circuit, the voltage values of terminals AD1, AD3 (Fig. 1) are always monitored, and the operator detects a touched coordinate position in real time, and when the touch is detected, a detected touched position is stored once in a RAM, and the touched coordinate position is detected again, and a coordinate position is decided only when deviation with the coordinate position stored in the RAM shows a value less than a prescribed value A. Since the coordinate position is decided by detecting the touched coordinate position by the operator twice in such way, a touched coordinate is detected with high precision even without providing the touch detection circuit as in a conventional device. Also, since the coordinate position is decided based on the detected results of the coordinate position twice, the erroneous detection of the coordinate position caused by the influence of a noise such as chattering, etc., is suppressed.

With respect to the prior art further attention is drawn to JP2001306259 which is concerned with obtaining accurate coordinate data even when chatter occurs in a touch panel device. To this end, at the time of converting a measured voltage value measured according to a touch position when a touch panel is touched into the coordinate data of the touch position, and outputting the coordinate data, when the touch panel is touched, a measured voltage value is measured plural times, and the first measured voltage value is defined as a reference voltage value, and the second and following measured voltage values are defined as comparison voltage values. The reference voltage value and the comparison voltage values are successively compared, and when they are continuously matched the preliminarily decided specific number of times, the reference voltage value or the comparison value are converted into coordinate data.

With respect to the prior art further attention is drawn to JP3083113 which is concerned with preventing erroneous detection by generating a read timing signal only in the period when an output coordinate detection signal is stable and excluding an influence of chattering to read the output coordinate detection signal regardless of this influence included in the output coordinate detection signal. To this end, the read timing signal for an output x-direction coordinate detection signal Ox' and an output y-direction coordinate detection signal Oy' is generated by a fourth integrating circuit and a second comparing circuit. The integral rise time constant of the fourth integrating circuit is set to a value longer than those of second and third integrating circuits, and the reference level of the second comparing circuit is so determined that the integral output of the fourth integrating circuit is allowed to pass as the read timing signal after the completion of rise of the output x-direction coordinate detection signal Ox' and the output y-direction coordinate detection signal Oy'. Thus, an influence of chattering is not included in output coordinate detection signals read in based on the read timing signal though chattering has an influence upon output coordinate detection signals Ox' and Oy'.

With respect to the prior art further attention is drawn to US-A-6,366,866 B1 from which a coordinates detecting apparatus for independently correcting coordinates is known. In this coordinates detecting apparatus including a tablet for detecting X and Y coordinates and a correcting circuit for correcting the X and Y coordinates detected from the tablet, a parameter used for correcting the X coordinate and a parameter used for correcting the Y coordinate are adjustable independent from each other. More specifically, time constant of a CR filter circuit for the X coordinate and time constant of the CR filter circuit for the Y coordinate can be adjusted independent from each other. Further, numbers of A/D conversion, threshold values, number of samples and so on for the X and Y coordinates can be set independent from each other. As a result, in the coordinates detecting apparatus, noises in X and Y coordinates can be optimally removed, allowing detection of X and Y coordinates with high accuracy.

### SUMMARY OF THE INVENTION

The present invention relates to a coordinate positioning method as claimed in claim 1. Further, the present invention relates to a coordinate positioning device as claimed in claim 3.

Preferred embodiments of the invention are disclosed in the dependent claims.

It is therefore an object of the invention to provide an noise canceling coordinate positioning device and the method thereof.

According to the object of the invention, a positioning method is provided to be applied in a thin film positioning device for detecting the coordinates of a contact point even in an environment of periodic noises. The steps of the positioning method are disclosed below. Firstly, obtain a first sampling value of the contact point at a first time point and a second sampling value of the contact point at a second time point in succession. Next, determine if the absolute value of the difference between the first sampling value and the second sampling value is smaller than a first threshold value or not. If not, neglect this contact point and end the process of this method; if yes, obtain a third sampling value of the contact point at a third time point. Lastly, determine if the absolute value of the difference between the first sampling value and the third sampling value is smaller than a second threshold value or not: if not, neglect this contact point and end the process of this method; if yes, use the average values of the first sampling value and the second sampling value to obtain the coordinates of the contact point.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a circuit diagram of a resistance-type film positioning device;

FIG. 2A is an equivalent circuit diagram for a thin film positioning device when detecting the X-coordinate of the contact;

FIG. 2B is an equivalent circuit diagram for a thin film positioning device when detecting the Y-coordinate of the contact point;

FIG. 3 is a schematic diagram of periodic noises;

FIG. 4 is a flowchart of a positioning method according to a preferred embodiment of the invention; and

FIG. 5A and FIG. 5B are voltage diagrams for point XP.

### DETAILED DESCRIPTION OF THE INVENTION

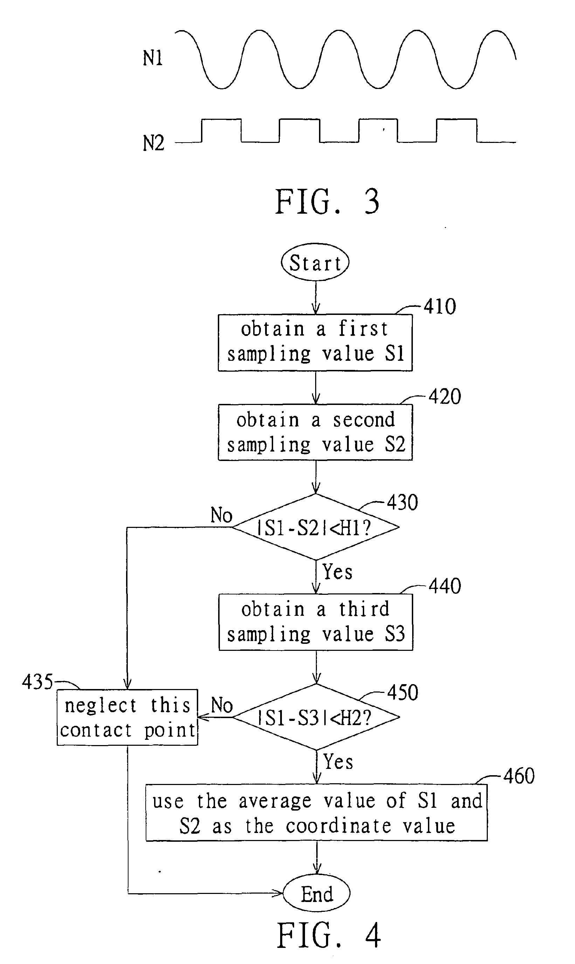

When applied in an electronic device, a thin film positioning device is likely to be coupled to plenty of noises which will cause errors to the coordinates obtained. These noises are periodic. Take the thin film positioning device disposed on the touch panel of a personal digital assistant (PDA) for example. The liquid crystal display screen has high-frequency signals such as pixel clock signal, horizontal synchronization signals, and vertical synchronization signal to maintain an updating frequency of 30 frames per second. According to actual observation, these high-frequency signals will become periodic noises when coupled to an electric device. FIG. 3 is a schematic diagram of periodic noises. When detecting the coordinates of the contact point, the film positioning device 100 of an electronic device are likely to be coupled to noises such as sine wave noises N1 or square wave noises N2. The thin film positioning device according to the invention can promptly and precisely position the coordinates of the contact point under the circumstance of periodic noises.

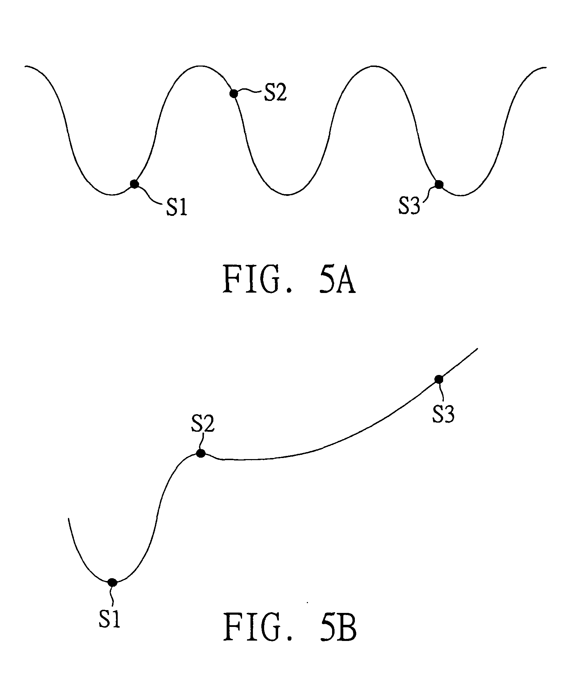

Referring to FIG. 4, a flowchart of a positioning method according to a preferred embodiment of the invention. Let T be the period of periodic noises. When detecting the X-coordinate or the Y-coordinate of a contact point, the voltage at point XP, point XM, point YP or point YM of the thin film positioning device 100 is sampled and measured. Here, point XP is used as an example of explanation. Having taken the voltage value of the sampled point XP, the ration between R_right and R_left will be obtained whereby the X-coordinate of the contact point can be referred. Referring to both FIG. 5A and FIG. 5B, voltage diagrams for point XP. Since the voltage at point XP is coupled to a periodic noise, the voltage value at point XP will show a periodic pattern as well. Firstly, obtain a first sampling value S1 of point XP at a first time point as shown in step 410. Next, obtain a second sampling value S2 of point XP at a second time point as shown in step 420. The interval between the first time point and the second time point is roughly a half of the noise period T.

If the voltage at point XP shows a periodic pattern as that in FIG. 5A and further shows a moderate oscillation, then the average of the first sampling value S1 and the second sampling value S2 can be regarded as the voltage value of point XP. However, the voltage at point XP sometimes shows an irregular pattern due to the sudden change of the noise. If this is the case, the average of the first sampling value and the second sampling value cannot be seen as the voltage value of point XP and a further check is required. Determine if the absolute value of the difference between the first sampling value S1 and the second sampling value S2 is smaller than a first threshold value H1 or not as shown in step 430: if not, proceed to step 435 and neglect the present contact point because the above samplings fail to represent the actual point touched by the user.

Next, considering the voltage at point XP might surge up if the user applies too weak a force, so a further check is conducted in step 440. If the user applies too weak a force at the positioning device 100, the resistance at R_touch will surge up. Referring to FIG. 2A, if the electricity of capacitance Cxp has not been fully discharged, a small current will flow through R_touch causing the voltage at point XP to surge up as shown in FIG. 5B.

In step 440, a third sampling value is obtained at a third time point. The interval between the first time point and the third time point is roughly a multiple of T, the period of the periodic noise. Next, proceed to step 450 to determine if the absolute value of the difference between S1and S3 is smaller than a second threshold value H2 or not: if yes, the average value of S1 and S2 is used as the sampling value of point XP to obtain the X-coordinate of point XP accordingly; if not, proceed to step 435 and neglect the contact point. Theoretically, since the noise is periodic, sampling value S3 should be much the same as sampling value S1 while threshold value H2 should be smaller than threshold value H1. However, if the user applies too weak a force at the positioning device 100, S3 will surge up as shown in FIG. 5B. If this is the case, this contact point should be neglected as if the user did not touch the positioning device at all.

The above disclosure uses the detection of the voltage at point XP as an example. However, the above procedures can also be applied to the detection of the voltage at points YP, YM, or XM as well. With only three samplings, the invention can promptly obtain the X-coordinate or the Y-coordinate of the contact point under an environment of periodic noises, avoiding the error of estimate due to the instant instability of the noise and due to too weak a force is applied at the contact point, thereby having the advantages of both promptness and preciseness.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A coordinate positioning method, which is applied in a thin film positioning device (100) for detecting a coordinate value of a contact point under an environment of periodic noises, comprising the steps of:
obtaining a first sampling value (S1) of the contact point at a first time point;
obtaining a second sampling value (S2) of the contact point at a second time point, wherein the interval between the first time point and the second time point is roughly a half of the period of the periodic noise;
determining if an absolute value of the difference between the first sampling value (S1) and the second sampling value (S2) is smaller than a first threshold value (H1) or not;
if the absolute value of the difference between the first sampling value (S1) and the second sampling value (S2) is smaller than the first threshold value (H1),
obtaining a third sampling value (S3) of the contact point at a third time point, wherein the interval between the third time point and the first time point is roughly a multiple of the period of the periodic noise;
determining if an absolute value of the difference between the first sampling value (S1) and the third sampling value (S3) is smaller than a second threshold value (H2) or not; and
if the absolute value of the difference between the first sampling value (S1) and the third sampling value (S3) is smaller than the second threshold value (H2),
using an average value of the first sampling value (S1) and the second sampling value (S2) to obtain the coordinate of the contact point;
wherein if the absolute value of the difference between the first sampling value (S1) and the third sampling value (S3) is not smaller than the second threshold value (H2), the contact point is neglected;
wherein if the absolute value of the difference between the first sampling value (S1) and the second sampling value (S2) is not smaller than the first threshold value (H1), the contact point is neglected.

2. The positioning method according to claim 1, wherein the first threshold value (H1) is larger than the second threshold value (H2).

3. A coordinate positioning device (100) for detecting a coordinate value of a contact point under an environment of periodic noise, comprising:
a thin film X which has a first X-end and a second X-end
a thin film Y which has a first Y-end and a second Y-end;
a first switch Y coupled to the first Y-end and a ground end;
a second switch Y coupled to the second Y-end and a power source;
a first switch X coupled to the first X-end and the ground end;
a second switch X coupled to the second X-end and the power source;
wherein, if a sampling point is to be sampled by the positioning device, the sampling point is the first X-end, the second X-end, the first Y-end or the second Y-end; first of all, a first sampling value (S1) of the sampling point is obtained at a first time point while a second sampling value (S2) of the sampling point is obtained at a second time point, wherein the interval between the first time point and the second time point is roughly a half of the period of the periodic noise;
wherein the coordinate positioning device determines if an absolute value of the difference between the first sampling value (S1) and the second sampling value (S2) is smaller than a first threshold value or not, wherein if not, the coordinate positioning device neglects the contact point;
wherein if the absolute value of the difference between the first sampling value (S1) and the second sampling value (S2) is smaller than the first threshold value (H1):
the coordinate positioning device (100) obtains a third sampling value (S3) of the sampling point at a third time point, wherein the interval between the third time point and the first time point is roughly a multiple of the period of the periodic noise;
the coordinate positioning device (100) determines if an absolute value of the difference between the first sampling value (S1) and the third sampling value (S3) is smaller than a second threshold value (H2) or not, wherein if not, the coordinate positioning device neglects the contact point;
the coordinate positioning device (100) uses an average value of the first sampling value (S1) and the second sampling value (S2) to obtain the coordinate value of the contact point.

4. The coordinate positioning device (100) according to claim 3, wherein the first threshold value (H1) is larger than the second threshold value (H2).

5. The coordinate positioning device (100) according to claim 3 or 4, wherein the thin film X and the thin film Y are plane resistances.

6. The coordinate positioning device (100) according to any of claims 3 to 5, wherein the first switch Y, the second switch Y, the first switch X, and the second switch X are transistors.

7. The coordinate positioning device (100) according to any of claims 3 to 6, wherein when detecting an X-coordinate of the contact point, the thin film positioning device connects the first switch Y and the second switch Y, then chooses a sampling point at the first X-end or at the second X-end to obtain the X-coordinate of the contact point accordingly.

8. The coordinate positioning device (100) according to any of claims 3 to 7, wherein when detecting an Y-coordinate of the contact point, the thin film positioning device connects the first switch X and the second switch X, then chooses a sampling point at the first Y-end or at the second Y-end to obtain the Y-coordinate of the contact point accordingly.

## Patentansprüche

1. Ein Koordinatenpositionierverfahren, welches in einem Dünnschichtpositioniergerät (100) zum Erfassen eines Koordinatenwerts eines Kontaktpunkts unter einer Umgebung von periodischem Rauschen angewendet wird, aufweisend die Schritte von:
Erhalten eines ersten Abtastwerts (S1) des Kontaktpunkts zu einem ersten Zeitpunkt;
Erhalten eines zweiten Abtastwerts (S2) des Kontaktpunkts zu einem zweiten Zeitpunkt, wobei das Intervall zwischen dem ersten Zeitpunkt annähernd eine Hälfte der Periode des periodischen Rauschens ist;
Ermitteln, ob ein Absolutwert der Differenz zwischen dem ersten Abtastwert (S1) und dem zweiten Abtastwert (S2) kleiner ist als ein erster Schwellenwert (H1) oder nicht;
falls der Absolutwert der Differenz zwischen dem ersten Abtastwert (S1) und dem zweiten Abtastwert (S2) kleiner ist als der erste Schwellenwert (H1),
Erhalten eines dritten Abtastwerts (S3) des Kontaktpunktes zu einem dritten Zeitpunkt, wobei das Intervall zwischen dem dritten Zeitpunkt und dem ersten Zeitpunkt annähernd ein Vielfaches der Periode des periodischen Rauschens ist;
Ermitteln, ob ein Absolutwert der Differenz zwischen dem ersten Abtastwert (S1) und dem dritten Abtastwert (S3) kleiner ist als ein zweiter Schwellenwert (H2) oder nicht; und
falls der Absolutwert der Differenz zwischen dem ersten Abtastwert (S1) und dem dritten Abtastwert (S3) kleiner ist als der zweite Schwellenwert (H2),
Verwenden eines Mittelwerts des ersten Abtastwerts (S1) und des zweiten Abtastwerts (S2), um die Koordinate des Kontaktpunkts zu erhalten;
wobei, falls der Absolutwert der Differenz zwischen dem ersten Abtastwert (S1) und dem dritten Abtastwert (S3) nicht kleiner als der zweite Schwellenwert (H2) ist, der Kontaktpunkt außer Acht gelassen wird;
wobei, falls der Absolutwert der Differenz zwischen dem ersten Abtastwert (S1) und dem zweiten Abtastwert (S2) nicht kleiner als der erste Schwellenwert (H1) ist, der Kontaktpunkt außer Acht gelassen wird.

2. Das Positionierverfahren nach Anspruch 1, wobei der erste Schwellenwert (H1) größer ist als der zweite Schwellenwert (H2).

3. Eine Koordinatenpositioniergerät (100) zum Erfassen eines Koordinatenwerts eines Kontaktpunkts unter einer Umgebung von periodischem Rauschen, aufweisend:
eine Dünnschicht x, welche ein erstes X-Ende und ein zweites X-Ende hat
eine Dünnschicht Y, welche ein erstes Y-Ende und ein zweites Y-Ende hat;
einen ersten Schalter Y, der an das erste Y-Ende und ein Masse-Ende gekoppelt ist;
einen zweiten Schalter Y, der an das zweite Y-Ende und eine Stromquelle gekoppelt ist;
einen ersten Schalter X, der an das erste X-Ende und das Masse-Ende gekoppelt ist;
einen zweiten Schalter X, der an das zweite X-Ende und die Stromquelle gekoppelt ist;
wobei, falls ein Abtastpunkt von dem Positioniergerät abgetastet werden soll, der Abtastpunkt das erste X-Ende, das zweite X-Ende, das erste Y-Ende oder das zweite Y-Ende ist; zuallererst wird ein erster Abtastwert (S1) des Abtastpunkts zu einem ersten Zeitpunkt erhalten, während ein zweiter Abtastwert (S2) des Abtastpunkts zu einem zweiten Zeitpunkt erhalten wird, wobei das Intervall zwischen dem ersten Zeitpunkt und dem zweiten Zeitpunkt annähernd eine Hälfte der Periode des periodischen Rauschens ist;
wobei das Koordinatenpositioniergerät ermittelt, ob ein Absolutwert der Differenz zwischen dem ersten Abtastwert (S1) und dem zweiten Abtastwert (S2) kleiner ist als ein erster Schwellenwert oder nicht, wobei, falls nicht, das Koordinatenpositioniergerät den Kontaktpunkt außer Acht lässt;
wobei, falls der Absolutwert der Differenz zwischen dem ersten Abtastwert (S1) und dem zweiten Abtastwert (S2) kleiner ist als der erste Schwellenwert (H1):
das Koordinatenpositioniergerät (100) einen dritten Abtastwert (S3) des Abtastpunkts zu einem dritten Zeitpunkt erhält, wobei das Intervall zwischen dem dritten Zeitpunkt und dem ersten Zeitpunkt annähernd ein Vielfaches der Periode des periodischen Rauschens ist;
das Koordinatenpositioniergerät (100) ermittelt, ob ein Absolutwert der Differenz zwischen dem ersten Abtastwert (S1) und dem dritten Abtastwert (S3) kleiner ist als ein zweiter Schwellenwert (H2) oder nicht, wobei, falls nicht, das Koordinatenpositioniergerät den Kontaktpunkt außer Acht lässt;
das Koordinatenpositioniergerät (100) einen Mittelwert des ersten Abtastwerts (S1) und des zweiten Abtastwerts (S2) verwendet, um den Koordinatenwert des Kontaktpunkts zu erhalten.

4. Das Koordinatenpositioniergerät (100) nach Anspruch 3, wobei der erste Schwellenwert (H1) größer ist als der zweite Schwellenwert (H2).

5. Das Koordinatenpositioniergerät (100) nach Anspruch 3 oder 4, wobei die Dünnschicht X und die Dünnschicht Y flache Widerstände sind.

6. Das Koordinatenpositioniergerät (100) nach einem der Ansprüche 3 bis 5, wobei der erste Schalter Y, der zweite Schalter Y, der erste Schalter X und der zweite Schalter X Transistoren sind.

7. Das Koordinatenpositioniergerät (100) nach einem der Ansprüche 3 bis 6, wobei, wenn eine X-Koordinate des Kontaktpunkts erfasst wird, das Dünnschichtpositioniergerät den ersten Schalter Y und den zweiten Schalter Y verbindet, danach einen Abtastpunkt an dem ersten X-Ende oder an dem zweiten X-Ende wählt, um demgemäß die x-Koordinate des Kontaktpunkts zu erhalten.

8. Das Koordinatenpositioniergerät (100) nach einem der Ansprüche 3 bis 7, wobei, wenn eine Y-Koordinate des Kontaktpunkts erfasst wird, das Dünnschichtpositioniergerät den ersten Schalter X und den zweiten Schalter X verbindet, danach einen Abtastpunkt an dem ersten Y-Ende oder an dem zweiten Y-Ende wählt, um demgemäß die Y-Koordinate des Kontaktpunkts zu erhalten.

## Revendications

1. Procédé de positionnement par coordonnées qui est appliqué dans un dispositif de positionnement à film mince (100) pour détecter une valeur de coordonnée d'un point de contact dans un environnement de bruits périodiques, comprenant les étapes qui consistent à :
recueillir une première valeur d'échantillonnage (S1) du point de contact à un premier moment ;
recueillir une deuxième valeur d'échantillonnage (S2) du point de contact à un deuxième moment, l'intervalle entre les premier et deuxième moments étant à peu près égal à la moitié de la période du bruit périodique ;
déterminer si une valeur absolue de la différence entre la première valeur d'échantillonnage (S1) et la deuxième valeur d'échantillonnage (S2) est inférieure ou non à une première valeur seuil (H1) ;
si la valeur absolue de la différence entre la première valeur d'échantillonnage (S1) et la deuxième valeur d'échantillonnage (S2) est inférieure à la première valeur seuil (H1),
recueillir une troisième valeur d'échantillonnage (S3) du point de contact à un troisième moment, l'intervalle entre le troisième moment et le premier moment étant à peu près égal à un multiple de la période du bruit périodique ;
déterminer si une valeur absolue de la différence entre la première valeur d'échantillonnage (S1) et la troisième valeur d'échantillonnage (S3) est inférieure ou non à une deuxième valeur seuil (H2) ; et
si la valeur absolue de la différence entre la première valeur d'échantillonnage (S1) et la troisième valeur d'échantillonnage (S3) est inférieure à la deuxième valeur seuil (H2),
utiliser une valeur moyenne de la première valeur d'échantillonnage (S1) et de la deuxième valeur d'échantillonnage (S2) pour recueillir la coordonnée du point de contact ;
étant précisé que si la valeur absolue de la différence entre la première valeur d'échantillonnage (S1) et la troisième valeur d'échantillonnage (S3) n'est pas inférieure à la deuxième valeur seuil (H2), le point de contact n'est pas pris en compte ;
étant précisé que si la valeur absolue de la différence entre la première valeur d'échantillonnage (S1) et la deuxième valeur d'échantillonnage (S2) n'est pas inférieure à la première valeur d'échantillonnage (H1), le point de contact n'est pas pris en compte.

2. Procédé de positionnement selon la revendication 1, selon lequel la première valeur seuil (H1) est supérieure à la deuxième valeur seuil (H2).

3. Dispositif de positionnement par coordonnées (100) pour détecter une valeur de coordonnée d'un point de contact dans un environnement de bruit périodique, comprenant :
un film mince X qui une première extrémité X et une deuxième extrémité X ;
un film mince Y qui a une première extrémité Y et une deuxième extrémité Y ;
un premier commutateur Y couplé à la première extrémité Y et à une extrémité de terre ;
un deuxième commutateur Y couplé à la deuxième extrémité Y et à une source de courant ;
un premier commutateur X couplé à la première extrémité X et à l'extrémité de terre ;
un deuxième commutateur X couplé à la deuxième extrémité X et à la source de courant ;
étant précisé que si un point d'échantillonnage doit être échantillonné par le dispositif de positionnement, le point d'échantillonnage est constitué par la première extrémité X, la deuxième extrémité X, la première extrémité Y ou la deuxième extrémité Y ; tout d'abord, une première valeur d'échantillonnage (S1) du point d'échantillonnage est recueillie à un premier moment tandis qu'une deuxième valeur d'échantillonnage (S2) du point d'échantillonnage est recueillie à un deuxième moment, l'intervalle entre le premier moment et le deuxième moment étant à peu près égal à la moitié de la période du bruit périodique ;
étant précisé que le dispositif de positionnement par coordonnées détermine si une valeur absolue de la différence entre la première valeur d'échantillonnage (S1) et la deuxième valeur d'échantillonnage (S2) est inférieure ou non à une première valeur seuil, et que si ce n'est pas le cas, le dispositif de positionnement par coordonnées ne prend pas en compte le point de contact ;
étant précisé que si la valeur absolue de la différence entre la première valeur d'échantillonnage (S1) et la deuxième valeur d'échantillonnage (S2) est inférieure à la première valeur seuil (H1) ;
le dispositif de positionnement par coordonnées (100) recueille une troisième valeur d'échantillonnage (S3) du point d'échantillonnage à un troisième moment, l'intervalle entre le troisième moment et le premier moment étant à peu près égal à un multiple de la période du bruit périodique ;
le dispositif de positionnement par coordonnées (100) détermine si une valeur absolue de la différence entre la première valeur d'échantillonnage (S1) et la troisième valeur d'échantillonnage (S3) est inférieure ou non à la deuxième valeur seuil (H2), et si ce n'est pas le cas, le dispositif de positionnement par coordonnées ne prend pas en compte le point de contact ;
le dispositif de positionnement par coordonnées (100) utilise une valeur moyenne de la première valeur d'échantillonnage (S1) et de la deuxième valeur d'échantillonnage (S2) pour recueillir la valeur de coordonnée du point de contact.

4. Dispositif de positionnement par coordonnées (100) selon la revendication 3, dans lequel la première valeur seuil (H1) est supérieure à la deuxième valeur seuil (H2).

5. Dispositif de positionnement par coordonnées (100) selon la revendication 3 ou 4, dans lequel le film mince X et le film mince Y sont des résistances planes.

6. Dispositif de positionnement par coordonnées (100) selon l'une quelconque des revendications 3 à 5, dans lequel le premier commutateur Y, le deuxième commutateur Y, le premier commutateur X et le deuxième commutateur X sont des transistors.

7. Dispositif de positionnement par coordonnées (100) selon l'une quelconque des revendications 3 à 6, dans lequel lors de la détection d'une coordonnée x du point de contact, le dispositif de positionnement à film mince relie le premier commutateur Y et le deuxième commutateur Y, puis choisit un point d'échantillonnage au niveau de la première extrémité X ou de la deuxième extrémité X pour recueillir en conséquence la coordonnée X du point de contact.

8. Dispositif de positionnement par coordonnées (100) selon l'une quelconque des revendications 3 à 7, dans lequel lors de la détection d'une coordonnée Y du point de contact, le dispositif de positionnement à film mince relie le premier commutateur X et le deuxième commutateur X, puis choisit un point d'échantillonnage au niveau de la première extrémité Y ou de la deuxième extrémité Y pour recueillir en conséquence la coordonnée Y du point de contact.
